# EUROPEAN PATENT APPLICATION

(11) **EP 3 866 089 A1**
(43) Date of publication of application: **18.08.2021**
(21) Application number: 21156976.9
(22) Date of filing: 12.02.2021
(51) Int. Cl.: G06Q 10/10, G06Q 50/00

(54) **INFORMATION PROCESSING DEVICE, NON-TRANSITORY STORAGE MEDIUM, AND SYSTEM**

(30) Priority: 14.02.2020 JP 2020023308
(71) Applicant: TOYOTA JIDOSHA KABUSHIKI KAISHA, Toyota-shi, Aichi-ken, 471-8571 (JP)
(72) Inventor: KANEKO, Nozomi, TOYOTA-SHI, AICHI-KEN, 471-8571 (JP); ONODERA, Aya, TOYOTA-SHI, AICHI-KEN, 471-8571 (JP); TATSUMOTO, Yuki, TOYOTA-SHI, AICHI-KEN, 471-8571 (JP); TAKENAMI, Tsuyoshi, NAGOYA, AICHI, 460-0003 (JP)
(74) Representative: Cabinet Beau de Loménie

(57) **Abstract**

An information processing device includes a processor (31) configured to acquire of information relating to a posted location that is a location about which a second user different from a first user has performed a first posting to a social networking system, and transmit an instruction to an onboard device (100) or a terminal (20A) of the first user, to display the posted location on a map displayed on a screen of the onboard device (100) or a screen of the terminal (20A) of the first user.

## Description

### BACKGROUND OF THE INVENTION

### 1. Field of the Invention

The invention relates to an information processing device, a non-transitory storage medium, and a system.

### 2. Description of Related Art

There is known a system where a shop list of souvenir shops is created in accordance with degree of popularity and displayed on a screen of a display device, and one of the souvenir shops in the shop list is specified as a destination or a transit point (e.g., Japanese Unexamined Patent Application Publication No. 2009-168567 (JP 2009-168567 A)).

### SUMMARY OF THE INVENTION

When traveling, one user might pass near a location about which other users have posted to a social networking service (hereinafter, also referred to as "SNS"), but pass by the location without noticing. The invention provides an information processing device, a non-transitory storage medium, and a system, which can notify the one user of locations that other users have shown interest in.

An information processing device according to a first aspect of the invention includes a processor configured to acquire of information relating to a posted location that is a location about which one or more second users different from a first user have performed a first posting to a social networking system, and transmit an instruction to an onboard device or a terminal of the first user, to display the posted location on a map displayed on a screen of the onboard device or a screen of the terminal of the first user.

In the information processing device according to the first aspect of the invention, the processor may be configured to, when acquiring the information relating to the posted location, acquire information relating to a location about which the one or more second users have performed the first posting to the social networking system. The one or more second users may have a relation with the first user on the social networking system. In the information processing device according to the first aspect of the invention, the processor may be configured to, when acquiring information relating to the posted location, acquire information relating to a posted location for which a record of a positive reaction by the first user exists. In the information processing device according to the first aspect of the invention, the processor may be configured to, when acquiring information relating to the posted location, acquire information relating to a location about which at least a predetermined number of the one or more second users have performed posting. In the information processing device according to the first aspect of the invention, the processor may be configured to, when acquiring information relating to the posted location, acquire information relating to a posted location for which a record of a positive reaction by at least a predetermined number of the one or more second users exists. In the information processing device according to the first aspect of the invention, the processor may be configured to transmit an instruction to the onboard device or the terminal of the first user to display an image relating to the one or more second users having posted to the social networking system, at a position on the map displayed on the screen of the onboard device or the screen of the terminal of the first user that corresponds to the posted location. In the information processing device according to the first aspect of the invention, the processor may be configured to, when the first user taps on the image, transmit an instruction to the onboard device or the terminal of the first user to display, on the screen, content that the one or more second users have posted. In the information processing device according to the first aspect of the invention, the processor may be configured to, when transmitting an instruction to the terminal of the first user to display the posted location on the map displayed on the screen of the terminal of the first user, transmit an instruction to the terminal of the first user to display a posted location included in a predetermined region from a current location of the terminal of the first user.

A non-transitory storage medium according to a second aspect of the invention stores instructions that are executable by one or more processors and that cause the one or more processors to perform functions as follows. The functions are acquiring of information relating to a posted location that is a location about which one or more second users different from a first user have performed a first posting to a social networking system, and transmitting an instruction to an onboard device or a terminal of the first user, to display the posted location on a map displayed on a screen of the onboard device or a screen of the terminal of the first user.

In the non-transitory storage medium according to the second aspect of the invention, information relating to the posted location may include information relating to a location about which the one or more second users have performed the first posting to the social networking system. The one or more second users may have a relation with the first user on the social networking system. In the non-transitory storage medium according to the second aspect of the invention, information relating to the posted location may include information relating to a posted location for which a record of a positive reaction by the first user exists. In the non-transitory storage medium according to the second aspect of the invention, information relating to the posted location may include information relating to a location about which at least a predetermined number of the one or more second users have performed posting. In the non-transitory storage medium according to the second aspect of the invention, information relating to the posted location may include information relating to a posted location for which a record of a positive reaction by at least a predetermined number of the one or more second users exists. In the non-transitory storage medium according to the second aspect of the invention, the functions may further include transmitting an instruction to the onboard device or the terminal of the first user to display an image relating to the one or more second users having posted to the social networking system, at a position on the map displayed on the screen of the onboard device or the screen of the terminal of the first user that corresponds to the posted location. In the non-transitory storage medium according to the second aspect of the invention, the functions may further include transmitting an instruction to the onboard device or the terminal of the first user to display, on the screen, content that the one or more second users have posted, when the first user taps on the image.

A system according to a third aspect of the invention includes an onboard device or a terminal of a first user, the onboard device or the terminal having a screen configured to display a map, and a server. The server has a processor configured to acquire of information relating to a posted location that is a location about which one or more second users different from the first user have performed a first posting to a social networking system, and transmit an instruction to the onboard device or the terminal of the first user, to display the posted location on the map displayed on a screen of the onboard device or a screen of the terminal of the first user.

In the system according to the third aspect of the invention, the processor may be configured to, when acquiring the information relating to the posted location, acquire information relating to a location about which the one or more second users have performed the first posting to the social networking system. The one or more second users may have a relation with the first user on the social networking system. In the system according to the third aspect of the invention, the processor may be configured to, when acquiring information relating to the posted location, acquire information relating to a posted location for which a record of a positive reaction by the first user exists. In the system according to the third aspect of the invention, the processor may be configured to, when acquiring information relating to the posted location, acquire information relating to a location about which at least a predetermined number of the one or more second users have performed posting. In the system according to the third aspect of the invention, the processor may be configured to transmit an instruction to the onboard device or the terminal of the first user to display an image relating to the one or more second users having posted to the social networking system, at a position on the map displayed on the screen of the onboard device or the screen of the terminal of the first user that corresponds to the posted location.

According to the invention, the user can be notified of locations that other users have shown interest in.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram illustrating a schematic configuration of a system according to a first embodiment;
FIG. 2 is a block diagram schematically illustrating an example of a configuration of each of an onboard device, a user terminal, a center server, and an SNS server that constitute the system according to the first embodiment;
FIG. 3 is a diagram exemplifying a functional configuration of the center server;
FIG. 4 is a diagram exemplifying a table configuration of first user information;
FIG. 5 is a diagram exemplifying a table configuration of SNS information;
FIG. 6 is a diagram exemplifying a table configuration of travelling information;
FIG. 7 is a diagram exemplifying a functional configuration of the user terminal;
FIG. 8 is a diagram exemplifying a functional configuration of the onboard device;
FIG. 9 is a flowchart of providing processing according to the first embodiment;
FIG. 10 is a flowchart of processing that a first user management unit according to the first embodiment executes;
FIG. 11 is a flowchart of processing that a navigation unit according to the first embodiment executes;
FIG. 12 is a flowchart of processing that an SNS account transmission unit according to the first embodiment executes;
FIG. 13 is a sequence diagram illustrating processing of the overall system;
FIG. 14 is a diagram illustrating an example of a map displayed on an output unit (display) of the onboard device;
FIG. 15 is a diagram illustrating a schematic configuration of a system according to a second embodiment;
FIG. 16 is a diagram exemplifying a table configuration of first user information;
FIG. 17 is a diagram exemplifying a table configuration of travelling information;
FIG. 18 is a diagram exemplifying a function configuration of a user terminal;
FIG. 19 is a flowchart of providing processing according to the second embodiment; and
FIG. 20 is a flowchart of processing that a first user management unit according to the second embodiment executes.

### DETAILED DESCRIPTION OF EMBODIMENTS

An information processing device is one form of the present disclosure. The information processing device is provided with a control unit that acquires information relating to a posted location that is a location about which a second user, who is a different user from a first user, has performed a first posting to a social networking system (SNS). The second user is a user using the SNS. The second user who has posted to the SNS may be a user who is related to the first user, or may be a user who is unrelated to the first user. The second user who is related to the first user is a user that the first user is following, or a user in a friend relation with the first user, for example. The first posting may include information relating to a photograph of the posted location, a description of the posted location, impressions of the posted location, and so forth. Information relating to the posted location includes, for example, position information that reveals the location, descriptive text by a user regarding the location, or the like.

Also, the control unit transmits an instruction to a terminal of the first user, to display the posted location on a map displayed on a screen of the terminal of the first user. The terminal of the first user that displays the map may be a different terminal from a terminal that the first user uses to post to the SNS, or a terminal that the first user uses to view the SNS. Also, the terminal of the first user may be a terminal installed in a vehicle that the first user drives, or may be a terminal carried by the first user, for example. The map is displayed on the screen of the terminal of the first user. The control unit transmits an instruction to the terminal of the first user, to display the posted location of the second user on the map. Accordingly, the posted location is displayed at the terminal of the first user on the map. Thus, the first user can tell the location about which the second user posted. That is to say, the first user can be notified about locations that other users are showing interest in.

Embodiments of the invention will be described below with reference to the drawings. Note that the configurations of the following embodiments are exemplary, and that the invention is not restricted to the configurations of the embodiments. Also, the following embodiments can be combined to the fullest extent, as long as not being self-contradictory.

### First Embodiment

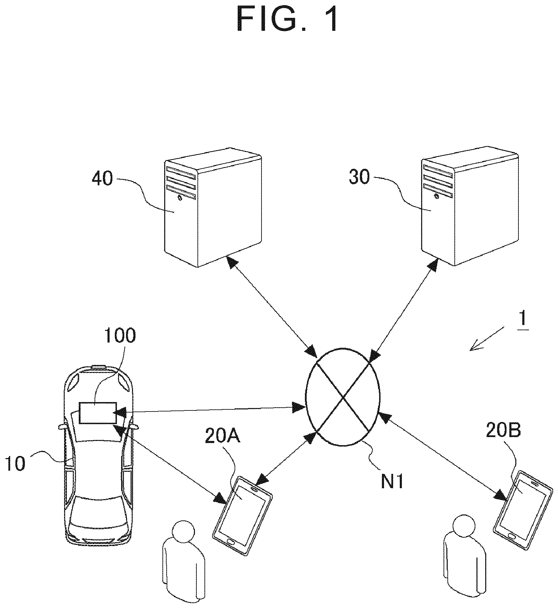

FIG. 1 is a diagram illustrating a schematic configuration of a system 1 according to the present embodiment. The system 1 displays a location, about which the second user has posted a first posting to the SNS, on an onboard device 100 of a vehicle 10 that the first user is on board. The onboard device 100 includes a navigation system, for example. The second user is a user who is related to the first user on the SNS. The second user may be a user that the first user is following on the SNS, or a user in a friend relation with the first user on the SNS, for example. Alternatively, the second user may be a user who has shown a positive reaction regarding a post by the first user (e.g., pressed a like button, or given at least a predetermined number of stars). The first user has a first-user terminal 20A. Also, the second user has a second-user terminal 20B. Note that in the following, when not distinguishing the first-user terminal 20A and the second-user terminal 20B, these will simply be referred to as "user terminal(s) 20". The user terminals 20 are terminals capable of posting to the SNS and viewing the SNS.

In the example in FIG. 1, the system 1 includes the onboard device 100 installed in the vehicle 10, the first-user terminal 20A, the second-user terminal 20B, a center server 30, and an SNS server 40. The onboard device 100, the first-user terminal 20A, the second-user terminal 20B, the center server 30, and the SNS server 40 are connected to each other by a network N1. Note that the network N1 is a global-scale public communication network such as the Internet and so forth, for example, and wide area network (WAN) and other communication networks may be employed. The network N1 may also include telephone communication networks of cellular phones or the like, wireless communication networks such as Wi-Fi (registered trademark), and so forth. The onboard device 100 and the first-user terminal 20A also are connected by near-field communication such as Bluetooth (registered trademark). Note that although FIG. 1 exemplarily illustrates two user terminals 20, a plurality of users each has a user terminal 20, and there are as many user terminals 20 as users. Also, FIG. 1 exemplarily illustrates one vehicle 10, but there may be a plurality of vehicles 10.

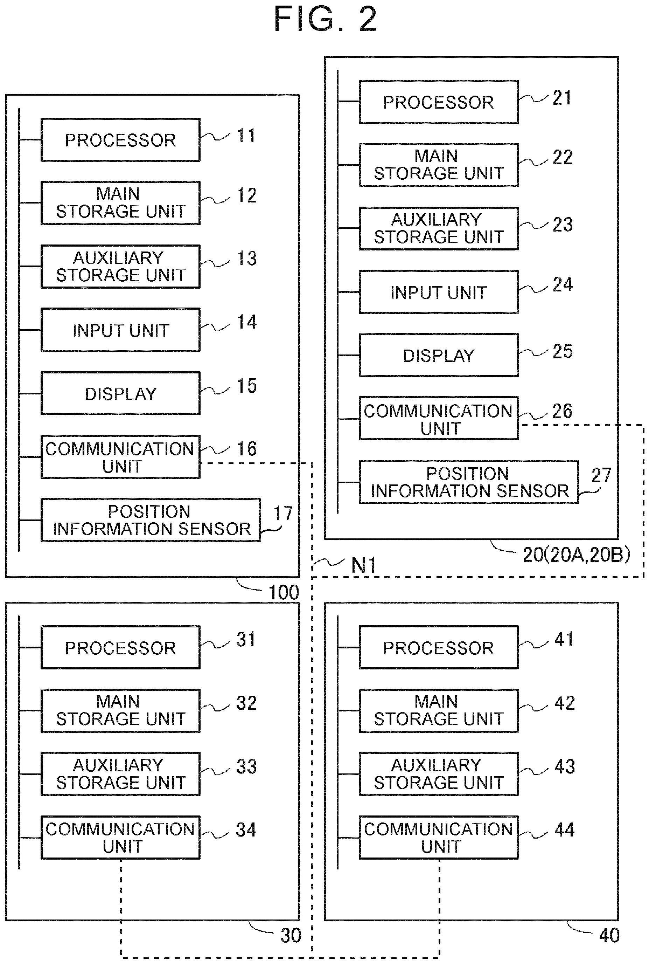

The hardware configurations and the functional configurations of the onboard device 100, the user terminals 20, the center server 30, and the SNS server 40 will be described with reference to FIG. 2. FIG. 2 is a block diagram schematically illustrating an example of the configurations of each of the onboard device 100, the user terminals 20, the center server 30, and the SNS server 40 that constitute the system 1 according to the present embodiment.

The center server 30 has the configuration of a common computer. The center server 30 has a processor 31, a main storage unit 32, an auxiliary storage unit 33, and a communication unit 34. These are connected to each other by a bus.

The processor 31 is a central processing unit (CPU), digital signal processor (DSP), or the like. The processor 31 controls the center server 30 and performs computation of various types of information processing. The processor 31 is an example of a control unit. The main storage unit 32 is random access memory (RAM), read-only memory (ROM), or the like. The auxiliary storage unit 33 is erasable programmable ROM (EPROM), a hard disk drive (HDD), removable media, or the like. An operating system (OS), various types of programs, various types of tables, and so forth, are stored in the auxiliary storage unit 33. The processor 31 loads programs stored in the auxiliary storage unit 33 to a work area of the main storage unit 32 and executes the programs, and the components and so forth are controlled through execution of the programs. Thus, the center server 30 realizes functions satisfying predetermined objectives. The main storage unit 32 and the auxiliary storage unit 33 are computer-readable recording media. Note that the center server 30 may be a single computer, or may be a plurality of computers in collaboration. Also, information stored in the auxiliary storage unit 33 may be stored in the main storage unit 32. Also, information stored in the main storage unit 32 may be stored in the auxiliary storage unit 33.

The communication unit 34 is means for the center server 30 to perform communication with the onboard device 100, the user terminals 20, and the SNS server 40 via the network N1. Examples of the communication unit 34 include a local area network (LAN) interface board and a wireless communication circuit for wireless communication. The LAN interface board and the wireless communication circuit are connected to the network N1.

Note that the series of processing executed by the center server 30 may be executed by hardware, and may also be executed by software.

The SNS server 40 has the configuration of a common computer. The SNS server 40 includes a processor 41, a main storage unit 42, an auxiliary storage unit 43, and a communication unit 44. These are connected to each other by a bus. The processor 41, the main storage unit 42, the auxiliary storage unit 43, and the communication unit 44 are the same as the processor 31, the main storage unit 32, the auxiliary storage unit 33, and the communication unit 34 of the center server 30, and accordingly, description will be omitted.

Next, the user terminal 20 will be described. The user terminal 20 is, for example, a small-sized computer, such as a smartphone, a cellular phone, a tablet terminal, a personal digital assistant, a wearable computer (smartwatch or the like), or a personal computer (PC). The user terminal 20 has a processor 21, a main storage unit 22, an auxiliary storage unit 23, an input unit 24, a display 25, a communication unit 26, and a position information sensor 27. These are connected to each other by a bus. The processor 21, the main storage unit 22, and the auxiliary storage unit 23 are the same as the processor 31, the main storage unit 32, and the auxiliary storage unit 33 of the center server 30, and accordingly, description will be omitted.

The input unit 24 is means for accepting input operations performed by the user, for example, a touchscreen, a mouse, a keyboard, a pushbutton and so forth. The display 25 is means for presenting the user with information, for example, a liquid crystal display (LCD) an electroluminescent (EL) panel and so forth. The input unit 24 and the display 25 may be configured as a single touchscreen display. The communication unit 26 is communication means for connecting the user terminal 20 to the network N1. The communication unit 26 is a circuit that performs communication with other devices (e.g., the onboard device 100 and the center server 30) via the network N1, using a wireless communication network such as a mobile communication service (e.g., a telephone communication network such as 5th generation (5G), 4th generation (4G), 3rd generation (3G), and long term evolution (LTE)), Wi-Fi (registered trademark) and Bluetooth (registered trademark).

The position information sensor 27 acquires position information (e.g., latitude and longitude) of the user terminal 20. The position information sensor 27 is, for example, a global positioning system (GPS) receiver and a wireless LAN communication unit. Position information acquired by the position information sensor 27 is transmitted to the SNS server 40 when posting to the SNS. Note that the position information may be included in image information transmitted to the SNS server 40.

Next, the onboard device 100 of the vehicle 10 will be described. The onboard device 100 has a processor 11, a main storage unit 12, an auxiliary storage unit 13, an input unit 14, a display 15, a communication unit 16, and a position information sensor 17. These are connected to each other by a bus. The processor 11, the main storage unit 12, the auxiliary storage unit 13, the input unit 14, the display 15, and the communication unit 16 are the same as the processor 21, the main storage unit 22, the auxiliary storage unit 23, the input unit 24, the display 25, and the communication unit 26 of the user terminal 20, and accordingly description will be omitted.

The position information sensor 17 acquires position information (e.g., latitude and longitude) of the vehicle 10 at a predetermined cycle. The position information sensor 17 is, for example, a GPS receiver or a wireless LAN communication unit. Information acquired by the position information sensor 17 is, for example, stored in the auxiliary storage unit 13 or the like and transmitted to the center server 30.

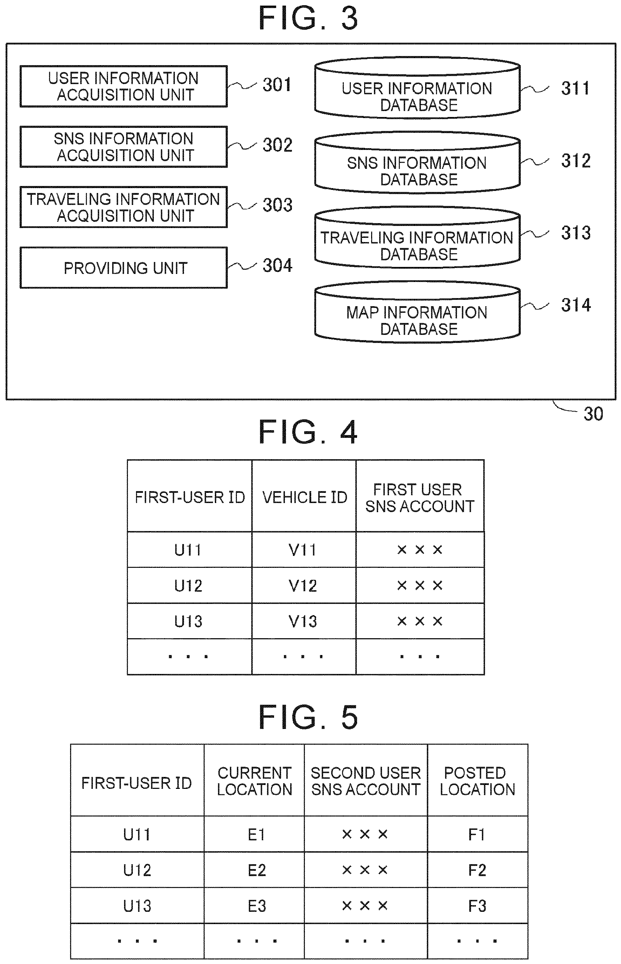

Next, the functions of the center server 30 will be described. FIG. 3 is a diagram exemplifying the function configuration of the center server 30. The center server 30 is provided with, as functional components, a user information acquisition unit 301, an SNS information acquisition unit 302, a traveling information acquisition unit 303, a providing unit 304, a user information database 311, an SNS information database 312, a traveling information database 313, and a map information database 314. The processor 31 of the center server 30 executes the processing of the user information acquisition unit 301, the SNS information acquisition unit 302, the traveling information acquisition unit 303, and the providing unit 304, by a computer program in the main storage unit 32. Note however, that one of the functional components, or part of the processing thereof, may be executed by a hardware circuit.

The user information database 311, the SNS information database 312, the traveling information database 313, and the map information database 314 are configured by a program of a database management system (DBMS) managing data stored in the auxiliary storage unit 33. The program of DBMS is executed by the processor 31. The user information database 311, the SNS information database 312, the traveling information database 313, and the map information database 314 are relational databases, for example.

Note that one of the functional components of the center server 30, or part of the processing thereof, may be executed by another computer connected to the network N1.

The user information acquisition unit 301 acquires information of the first user using the system 1 (hereinafter, also referred to as "first-user information"). The first-user information is information used to notify the first user, who is driving the vehicle 10, of a posted location by the second user. The first-user information includes a first-user ID that is a unique identifier to the first user, a vehicle ID that is a unique identifier to the vehicle 10, and the SNS account of the first user. For example, the onboard device 100 and the first-user terminal 20A perform near-field communication, whereby the onboard device 100 identifies the first-user ID of the first user driving the vehicle 10, and the SNS account of the first user, which will be described later. The first-user information is then transmitted from the onboard device 100 to the center server 30. Note that the first-user information may be transmitted from the first-user terminal 20A to the center server 30. The first-user information may also be registered in the center server 30 by the first user in advance, using the first-user terminal 20A. In the present embodiment, the SNS account of the first user is associated with the first-user ID, but alternatively, the SNS account of the first user may be associated with the vehicle ID. Upon acquiring the first-user information, the user information acquisition unit 301 stores the first-user information in the user information database 311, which will be described later.

The SNS information acquisition unit 302 acquires information relating to the posting (first posting) of the second user related to the first user to the SNS (hereinafter referred to as "SNS information") from the SNS server 40. This SNS information includes the SNS account of the second user and information relating to the location about which the second user has posted (e.g., position information). Note that the SNS information that is acquired may be restricted to information related to posted locations for which a record of a positive reaction by the first user exists. Positive reactions include the first user pressing a social button (e.g., pressed a like button, or given at least a predetermined number of stars) in response to the post of the second user, inputting some sort of text in response to the post, and so forth. Also, the SNS information that is acquired may be restricted to, for example, information related to posted locations that are within a predetermined region from the current location of the vehicle 10. For example, the predetermined region may be a region that is displayable on the map of the onboard device 100. Also, information relating to locations that have been posted may include information of names of buildings, names of shops, names of tourism sites, coordinates (e.g., latitude and longitude), and descriptions of the locations. Upon acquiring the SNS information, the SNS information acquisition unit 302 stores the SNS information in the SNS information database 312, which will be described later.

The traveling information acquisition unit 303 acquires travelling information of the vehicle 10. The travelling information is information transmitted from the onboard device 100 to the center server 30, and includes information relating to the current location of the vehicle 10. The travelling information also includes the vehicle ID associated with the vehicle 10, for example. Note that the travelling information may include the first-user ID of the first user driving the vehicle 10. Upon acquiring the travelling information, the traveling information acquisition unit 303 stores the travelling information in the traveling information database 313.

The providing unit 304 transmits an instruction to display the posted location of the second user on the map to the onboard device 100. The providing unit 304 transmits information indicating the posted location to the vehicle 10 based on the SNS information of the second user, in a manner associated with the SNS account of the second user. For example, information relating to an icon indicating the SNS account of the second user may be transmitted to the vehicle 10. Note that information to be transmitted to the vehicle 10 may be restricted to information related to, for example, posted locations that are within the predetermined region from the current location of the vehicle 10. Also, information to be transmitted to the vehicle 10 may be restricted to information related to posted locations for which a record of a positive reaction by the first user exists, for example.

Now, the configuration of the first-user information stored in the user information database 311 will be described with reference to FIG. 4. FIG. 4 is a diagram exemplifying the table configuration of the first-user information. The first-user information table includes the fields of first-user ID, vehicle ID, and first-user SNS account. Input to the first-user ID field is identification information for identifying the first user (user ID). Input to the vehicle ID field is identification information for identifying the vehicle 10 that the first user is driving (vehicle ID). Input to the first user SNS account field is information relating to the SNS account of the first user. This information is information necessary to display information relating to the posted location of the second user on the display 15 of the onboard device 100.

Next, the configuration of the SNS information stored in the SNS information database 312 will be described with reference to FIG. 5. FIG. 5 is a diagram exemplifying the table configuration of the SNS information. The SNS information table includes the fields of first-user ID, current location, second user SNS account, and posted location. Input to the first-user ID field is identification information for identifying the first user. Input to the current location field is information relating to the current location of the vehicle 10. Information relating to the current location of the vehicle 10 is provided by the onboard device 100. The vehicle 10 is a vehicle associated with the first user in the user information database 311. Note that information relating to the current location of the first-user terminal 20A transmitted from the first-user terminal 20A may be input to the current location field. Input to the second user SNS account field is information relating to the SNS account of the second user. Input to the posted location field is information relating to the location about which the second user posted to the SNS. Information relating to this location is position information detected by the position information sensor 27 of the second-user terminal 20B at the time of posting to the SNS, for example. The information relating to the SNS account of the second user and information relating to the posted location are provided by the SNS server 40.

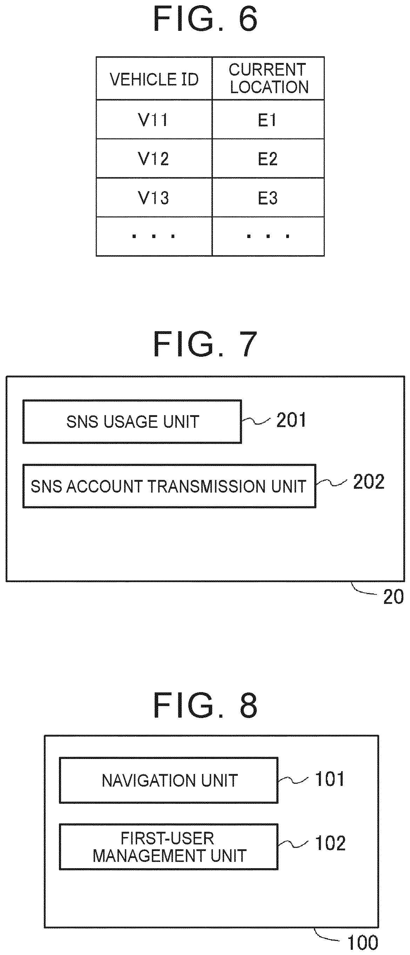

Next, the configuration of the traveling information stored in the traveling information database 313 will be described with reference to FIG. 6. FIG. 6 is a diagram exemplifying the table configuration of the traveling information. The traveling information table includes the fields of vehicle ID and current location. Input to the vehicle ID is identification information for identifying the vehicle 10. Input to the current location field is information relating to the current location of the vehicle 10. The information relating to the current location of the vehicle 10 is position information detected by the position information sensor 17 of the onboard device 100, and is provided by the onboard device 100.

The map information database 314 stores map data, map information including point-of-interest (POI) information, such as text and photographs, indicating features of the points in the map data. Note that the map information database 314 may be provided from another system connected to the network N1, for example a geographic information system (GIS).

Next, functions of the user terminal 20 will be described. FIG. 7 is a diagram exemplifying the functional configuration of the user terminal 20. The user terminal 20 is provided with an SNS usage unit 201 and an SNS account transmission unit 202, as functional components. The processor 21 of the user terminal 20 executes the processing of the SNS usage unit 201 and the SNS account transmission unit 202 by a computer program in the main storage unit 22. Note however, that the SNS usage unit 201 and the SNS account transmission unit 202, or part of the processing thereof, may be executed by a hardware circuit.

The SNS usage unit 201 displays an operation screen on the display 25, and transmits information corresponding to input to the input unit 24 by the user to the SNS server 40. For example, when the operation screen for the SNS or the like is displayed on the touchscreen display and the user performs some sort of input to this operation screen or the like, the SNS usage unit 201 transmits information corresponding to that input to the SNS server 40. For example, when a post by the second user and a social button (e.g., a like button) are displayed to the touchscreen display and the first user taps the social button, the SNS usage unit 201 transmits information indicating this to the SNS server 40. Also, for example, when a post to the SNS is input to the user terminal 20, the SNS usage unit 201 transmits information relating to the post to the SNS server 40.

The SNS account transmission unit 202 transmits the first-user ID and the SNS account of the first user to the onboard device 100 by near-field communication. The SNS account transmission unit 202 transmits the first-user ID and the SNS account of the first user, which are stored in the auxiliary storage unit 23, to the onboard device 100. Note that the SNS account of the first user may be received from an SNS application executed on the first-user terminal 20A.

Next, the functions of the onboard device 100 of the vehicle 10 will be described. FIG. 8 is a diagram exemplifying the functional configuration of the onboard device 100. The onboard device 100 is provided with a navigation unit 101 and a first-user management unit 102, as functional components. The processor 11 of the onboard device 100 executes the processing of the navigation unit 101 and the first-user management unit 102 by a computer program in the main storage unit 12. Note however, that the navigation unit 101 and the first-user management unit 102, or part of the processing thereof, may be executed by a hardware circuit.

The navigation unit 101 displays a map of the surroundings of the current location of the vehicle 10, based on map information stored in the auxiliary storage unit 13. The map information stored in the auxiliary storage unit 13 is information equivalent to map information stored in the map information database 314 of the center server 30. The navigation unit 101 also generates travel routes of the vehicle 10 based on the current location and the destination point that the first user has input via the input unit 14, and guides the first user over the travel route. At this time, the navigation unit 101 displays the travel route on the display 15 of the onboard device 100. For example, the navigation unit 101 displays the map and travel route on the display 15 and guides directions in which to travel by audio. The navigation unit 101 also transmits traveling information of the vehicle 10 to the center server 30 as required

The navigation unit 101 also receives SNS information transmitted from the center server 30, and displays locations about which the second user has posted on the map displayed on the display 15. The navigation unit 101 displays, on the map, thumbnails of images taken at the posted location, the SNS account of the second user, an icon representing the second user, and an avatar representing the second user, for example. This information is included in SNS information transmitted from the center server 30. Also, when a posted location displayed on the display 15 is tapped, the navigation unit 101 displays an image or content of a post corresponding to the posted location on the display 15.

The first-user management unit 102 acquires the first-user ID and the SNS account of the first user from the first-user terminal 20A, and transmits the first-user ID and the SNS account of the first user to the center server 30, along with the vehicle ID. The first-user management unit 102 uses the communication unit 16 to perform near-field communication with the first-user terminal 20A and acquire the first-user ID and the SNS account of the first user. The first-user management unit 102 also uses the communication unit 16 to transmit first-user information (first-user ID, vehicle ID, and the SNS account of the first user) to the center server 30 via the network N1.

Next, the SNS server 40 will be described. The SNS server 40 is a server that manages the SNS. The SNS server 40 manages posts to the SNS by the first user and the second user, the relation between the first user and the second user, and so forth. The SNS server 40 is capable of communication with the first-user terminal 20A, the second-user terminal 20B, and the center server 30, via the network N1. The SNS server 40 has recorded, in the auxiliary storage unit 43, posts of each of the users, locations about which each user has posted, and the relation between the first user and the second user. The SNS server 40 also has recorded therein posts about which the users have shown positive responses (e.g., pressed social buttons), and locations about which the posts are posted. The SNS server 40 provides information relating to the SNS, based on requests from the first-user terminal 20A, the second-user terminal 20B, and the center server 30.

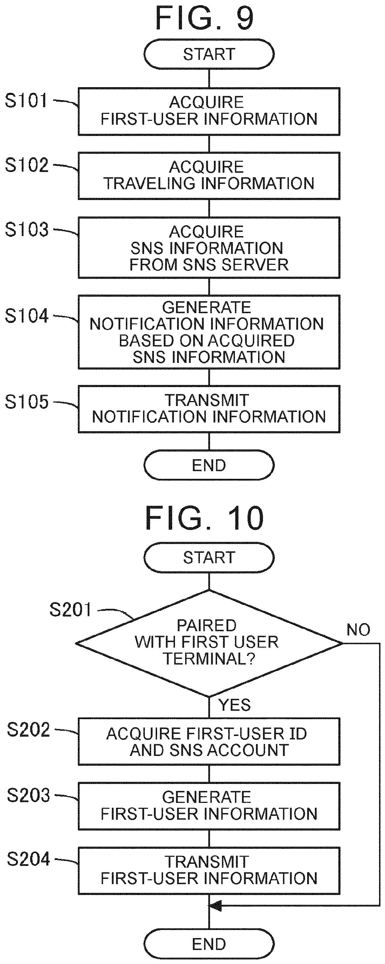

Next, providing processing, which is processing of the center server 30 providing the vehicle 10 with SNS information, will be described. FIG. 9 is a flowchart of the providing processing according to the present embodiment. The providing processing illustrated in FIG. 9 is repeatedly executed every predetermined amount of time with regard to each vehicle 10 by the center server 30. Note that description will be made below with the understanding that the user information database 311 and the traveling information database 313 store necessary information.

In step S101, the providing unit 304 acquires the first-user information. The relation between each vehicle 10 and the first user is stored in the user information database 311. The providing unit 304 reads the first user information corresponding to the vehicle 10. Next, in step S102, the providing unit 304 acquires the travelling information of the vehicle 10. The travelling information that the traveling information acquisition unit 303 has acquired from the vehicle 10 is stored in the traveling information database 313. Accordingly, the providing unit 304 reads the travelling information corresponding to the vehicle 10 that is stored in the traveling information database 313. The providing unit 304 acquires the travelling information corresponding to the vehicle 10 based on the vehicle ID included in the first-user information.

In step S103, the SNS information acquisition unit 302 acquires the SNS information of the second user from the SNS server 40. The SNS information acquisition unit 302 accesses the SNS server 40 and picks up the second user that has a relation with the first user (the second user that the first user is following). Further, the SNS information acquisition unit 302 acquires SNS information including information relating to locations about which the second user has posted from the SNS server 40. Note that the SNS information that is acquired from the SNS server 40 may be restricted to, for example, SNS information of which the location about which the second user has posted is included in a predetermined region from the current location of the vehicle 10. Also, the SNS information that is acquired from the SNS server 40 may be restricted to, for example, SNS information that corresponding to posts on which the first user has pressed a social button. The SNS information acquisition unit 302 stores the acquired SNS information in the SNS information database 312.

In step S104, the providing unit 304 generates notification information based on the SNS information acquired by the SNS information acquisition unit 302. The notification information includes, for example, instructions to display images relating to the second user at positions on the map displayed on the display 15 of the onboard device 100 corresponding to posted locations. The SNS information that the SNS information acquisition unit 302 acquires from the SNS server 40 is stored in the SNS information database 312. Accordingly, the providing unit 304 reads the SNS information stored in the SNS information database 312. The providing unit 304 generates notification information corresponding to posted locations included in the SNS information. The notification information includes at least information relating to the SNS account of the second user and information relating to posted locations. The notification information may also include image data relating to the second user. Note that the generated notification information may be restricted to, for example, notification information corresponding to posts on which the first user has pressed a social button. That is to say, in step S103, SNS information may be acquired regardless of whether the first user has pressed a social button on the posts, and in step S104, posts on which the first user has pressed a social button may be selected and notification information may be generated. Also, the notification information to be generated may be restricted to, for example, notification information corresponding to posted locations included in a predetermined region from the current location of the vehicle 10. In step S105, the providing unit 304 transmits the notification information to the onboard device 100 of the vehicle 10.

Next, processing that the first-user management unit 102 executes in the onboard device 100 will be described. FIG. 10 is a flowchart of processing that the first-user management unit 102 according to the present embodiment executes. The processing illustrated in FIG. 10 is repeatedly executed every predetermined amount of time by the first-user management unit 102.

In step S201, the first-user management unit 102 determines whether pairing with the first-user terminal 20A by near-field communication is established. When a positive determination is returned in step S201, the flow advances to step S202, and when a negative determination is returned, the routine is ended. In step S202, the first-user management unit 102 acquires the first-user ID and the SNS account of the first user from the first-user terminal 20A.

Next, in step S203, the first-user management unit 102 generates first-user information. The first-user management unit 102 generates the first-user information based on the first-user ID and the SNS account of the first user acquired from the first-user terminal 20A, and the vehicle ID stored in the auxiliary storage unit 13. Then, in step S204, the first-user management unit 102 transmits the generated first-user information to the center server 30.

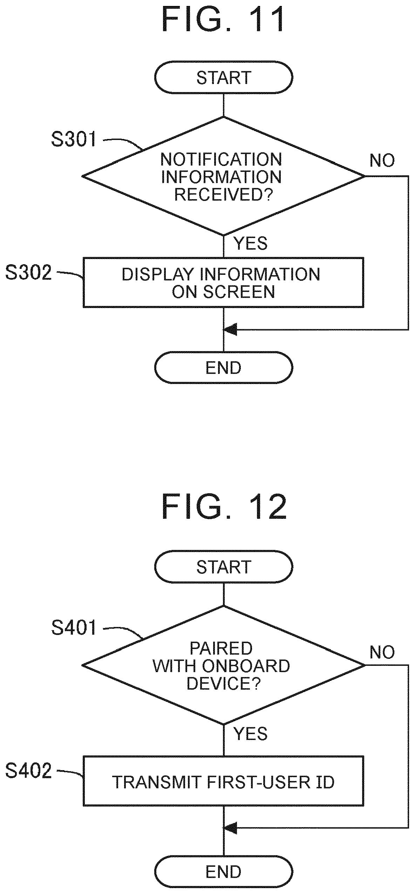

Next, the processing that the navigation unit 101 executes in the onboard device 100 will be described. FIG. 11 is a flowchart of processing that the navigation unit 101 according to the present embodiment executes. The processing illustrated in FIG. 11 is repeatedly executed every predetermined amount of time by the navigation unit 101.

In step S301, the navigation unit 101 determines whether notification information has been received from the center server 30. When a positive determination is returned in step S301, the flow advances to step S302, and when a negative determination is returned, the routine is ended. In step S302, the navigation unit 101 displays posted locations of the second user on the map displayed on the display 15. At this time, for example, thumbnails of images relating to the posted locations, the SNS account of the second user, an icon representing the second user, an avatar representing the second user, or the like, may be displayed on the map. When the first user taps an icon or the like displayed on the display 15, a post or an image corresponding to the tapped position may be displayed on the display 15, or a description corresponding to the tapped position may be displayed on the display 15.

Next, processing executed by the SNS account transmission unit 202 in the first-user terminal 20A will be described. FIG. 12 is a flowchart of processing that the SNS account transmission unit 202 according to the present embodiment executes. The processing illustrated in FIG. 12 is repeatedly executed every predetermined amount of time by the SNS account transmission unit 202. Note that description will be made below assuming that the auxiliary storage unit 23 of the first-user terminal 20A stores the first-user ID and the SNS account of the first user.

In step S401, the SNS account transmission unit 202 determines whether pairing with the onboard device 100 by near-field communication is established. When a positive determination is returned in step S401, the flow advances to step S402, and when a negative determination is returned, the routine is ended. In step S402, the SNS account transmission unit 202 transmits the first-user ID and the SNS account of the first user to the onboard device 100.

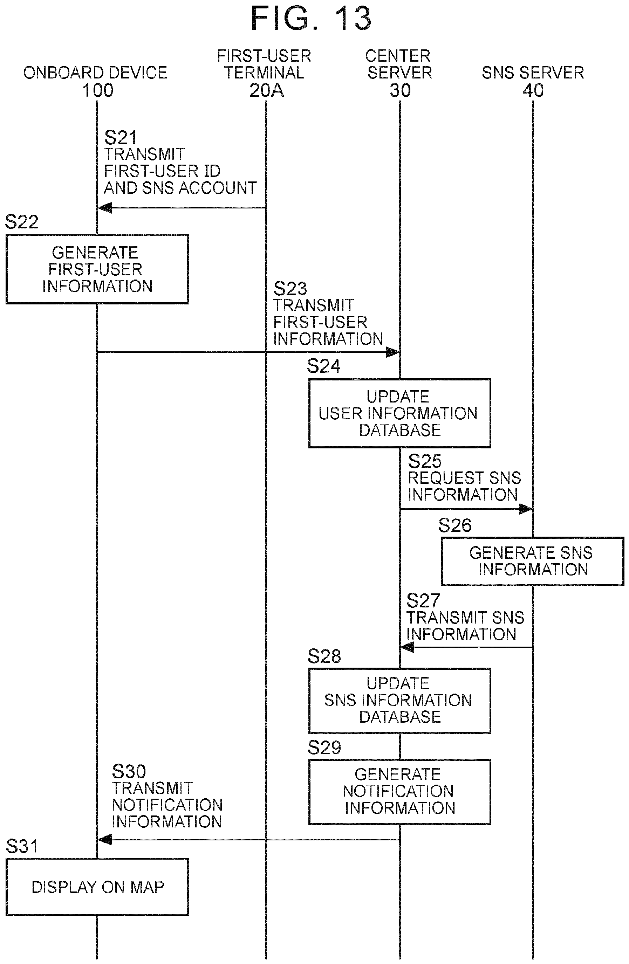

Next, processing of the overall system 1 will be described. FIG. 13 is a sequence diagram illustrating processing of the overall system 1. Note that position information is transmitted from the onboard device 100 of the vehicle 10 in FIG. 13 as required. Also, description will be made below with the understanding that the SNS server 40 stores posts made to the SNS from the first-user terminal 20A and the second-user terminal 20B.

When the first user enters the vehicle 10, communication between the first-user terminal 20A and the onboard device 100 is established, and the first-user ID and the SNS account of the first user are transmitted from the first-user terminal 20A to the onboard device 100 (S21). The first-user information is then generated at the onboard device 100 (S22), and the first-user information is transmitted to the center server 30 (S23). The user information database 311 is updated at the center server 30 that has received the first-user information (S24). The center server 30 also requests the SNS server 40 for the SNS information of the second user related to the first user (S25). The SNS server 40 that has received the request for the SNS information generates the SNS information of the second user (S26), and transmits the generated SNS information to the center server 30 (S27). The center server 30 that has received the SNS information updates the SNS information database 312 (S28), and generates notification information based on the SNS information (S29). The notification information is transmitted from the center server 30 to the onboard device 100 (S30). The onboard device 100 that has received the notification information displays posted locations of posts to the SNS on the map displayed on the display (S31).

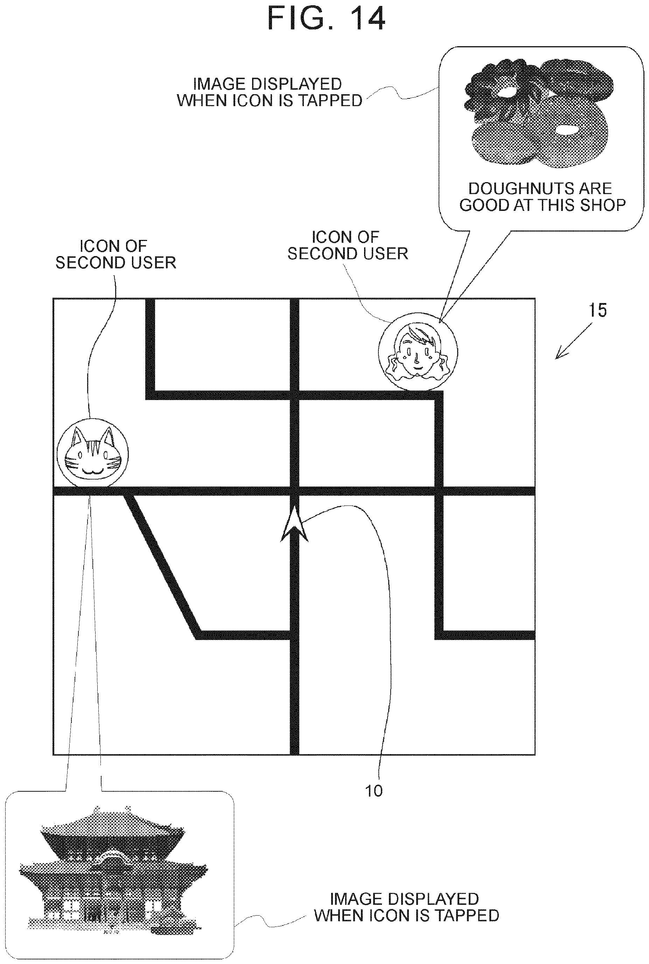

FIG. 14 is a diagram illustrating an example of a map displayed on the display 15 of the onboard device 100. FIG. 14 is an example of display of posted locations by the second user on the map, based on the notification information transmitted from the center server 30. A road map of a predetermined region surrounding the vehicle 10 is displayed on the display 15 and an icon for the vehicle 10 is displayed around the middle. Icons corresponding to the SNS account of the second user are displayed at positions corresponding to the posted location by the second user. By the first user viewing the information displayed on the display 15 in this manner, the first user can comprehend locations on the map related to posts in which the first user showed interest. Note that in addition to displaying icons of the second users on the display 15, guidance by sound may be performed as well, for example. When the first user taps on an icon of the second user displayed on the display 15, contents that the second user has posted (e.g., images or text) are displayed.

According to the present embodiment described above, locations which have interested the second user on the SNS, and further have interested the first user as well, are displayed on the map. Accordingly, a situation where the first user passes by such locations without noticing can be suppressed.

### Second Embodiment

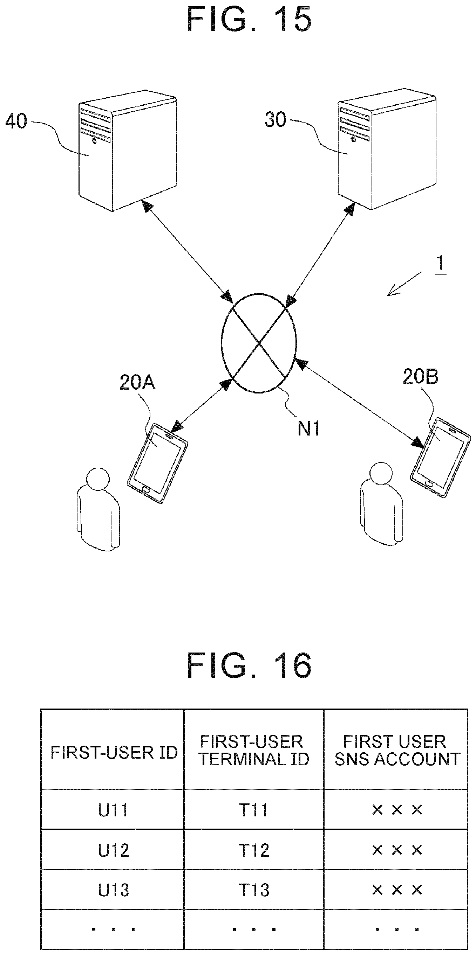

FIG. 15 is a diagram illustrating a schematic configuration of the system 1 according to a second embodiment. Although locations posted by the second user are displayed on the display 15 of the onboard device 100 in the above first embodiment, locations posted by the second user are displayed on the display 25 of the first-user terminal 20A, instead of the onboard device 100, in the second embodiment. When displaying a map on the display 25 of the first-user terminal 20A, locations posted by the second user may also be displayed together, for example. In this arrangement, the first user can know locations about which the second user has posted even without entering the vehicle 10. That is to say, the vehicle 10 and the onboard device 100 are not indispensable configurations. By displaying the map on the first-user terminal 20A, the first user can know locations about which the second user has posted even while the first user is traveling by foot, bicycle, train, or bus. The hardware configurations of the user terminals 20, the center server 30, and the SNS server 40 are the same as in FIG. 2, and accordingly description will be omitted. Also, the functional configuration of the SNS server 40 is the same as in the first embodiment, and accordingly description will be omitted.

Next, functions of the center server 30 will be described. The functional configuration of the center server 30 in FIG. 3 can be exemplified in the present embodiment as well. That is to say, the center server 30 is provided with, as functional components, the user information acquisition unit 301, the SNS information acquisition unit 302, the traveling information acquisition unit 303, the providing unit 304, the user information database 311, the SNS information database 312, the traveling information database 313, and the map information database 314. Description will be made below primarily regarding points that differ from the first embodiment.

The center server 30 communicates with the first-user terminal 20A via the network N1. The user information acquisition unit 301 of the center server 30 then acquires the first-user ID and the SNS account of the first user from the first-user terminal 20A, and stores the acquired ID and information in the user information database 311. Note that at this time, identification information for identifying the first-user terminal 20A (first-user terminal ID) may be transmitted from the first-user terminal 20A to the center server 30.

Now, the configuration of the first-user information stored in the user information database 311 will be described with reference to FIG. 16. FIG. 16 is a diagram exemplifying the table configuration of the first-user information. The first-user information table includes the fields of first-user ID, first-user terminal ID, and first-user SNS account. Input to the first-user ID field is identification information for identifying the first user (user ID). Input to the first-user terminal ID field is identification information for identifying the first-user terminal 20A (first-user terminal ID). Input to the first user SNS account field is information relating to the SNS account of the first user. This information is information necessary to display information relating to the posted location of the second user on the display 25 of the first-user terminal 20A.

The traveling information acquisition unit 303 acquires travelling information of the first-user terminal 20A. The travelling information here is information transmitted to the center server 30 from the first-user terminal 20A, and includes information relating to the current location of the first-user terminal 20A. The travelling information also includes the first-user terminal ID associated with the first-user terminal 20A, for example. Note that the travelling information may include the first-user ID. Upon acquiring the travelling information, the traveling information acquisition unit 303 stores the travelling information in the traveling information database 313.

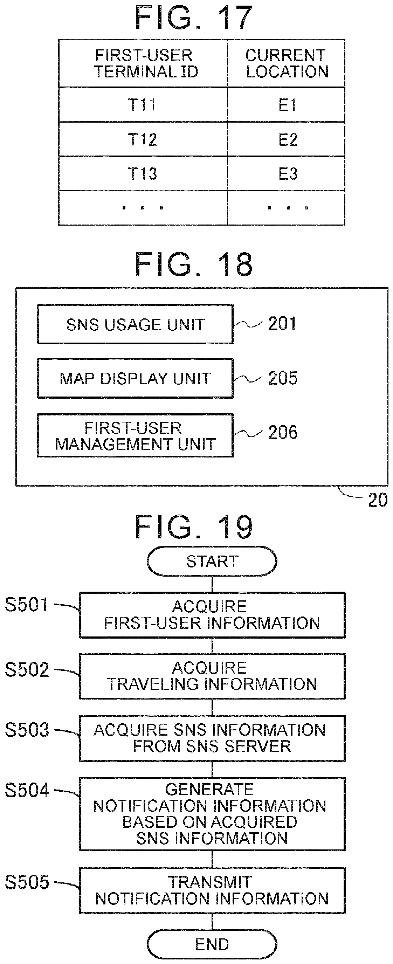

The configuration of the traveling information stored in the traveling information database 313 will be described with reference to FIG. 17. FIG. 17 is a diagram exemplifying the table configuration of the traveling information. The traveling information table includes the fields of first-user terminal ID and current location. Input to the first-user terminal ID is identification information for identifying the first-user terminal 20A. Input to the current location field is information relating to the current location of the first-user terminal 20A. The information relating to the current location of the first-user terminal 20A is position information detected by the position information sensor 27 of the first-user terminal 20A, and is provided by the first-user terminal 20A.

Note that the SNS information acquisition unit 302 has the same functions as in the first embodiment. However, information relating to the current location of the first-user terminal 20A is input to the current location field of the SNS information database 312.

Next, functions of the user terminal 20 will be described. FIG. 18 is a diagram exemplifying the functional configuration of the user terminal 20. The user terminal 20 is provided with the SNS usage unit 201, a map display unit 205, and a first-user management unit 206, as functional components. The processor 21 of the user terminal 20 executes the processing of the SNS usage unit 201, the map display unit 205, and the first-user management unit 206 by a computer program in the main storage unit 22. Note however, that the SNS usage unit 201, the map display unit 205, and the first-user management unit 206, or part of the processing thereof, may be executed by a hardware circuit.

The SNS usage unit 201 is the same as in the first embodiment, and accordingly description will be omitted. The map display unit 205 displays a map of the surroundings of the current location of the first-user terminal 20A, based on map information stored in the auxiliary storage unit 23. The map information stored in the auxiliary storage unit 23 is information equivalent to map information stored in the map information database 314 of the center server 30. The map display unit 205 may also have functions for guiding over a travel route, in the same manner as the navigation unit 101 described in the first embodiment.

The map display unit 205 also receives SNS information transmitted from the center server 30, and displays locations about which the second user has posted on the map displayed on the display 25. The map display unit 205 displays, on the map, thumbnails of images taken at the posted location, the SNS account of the second user, an icon representing the second user, and an avatar representing the second user, for example. This information is included in SNS information transmitted from the center server 30. Also, when a posted location displayed on the display 25 is tapped, the map display unit 205 may display an image or content of a post corresponding to the posted location on the display 25.

Next, the first-user management unit 206 transmits the first-user ID, the SNS account of the first user, and the travelling information, to the center server 30 along with the first-user terminal ID. This transmission may be performed every predetermined amount of time while the map is displayed on the display 25.

Next, providing processing, which is processing of the center server 30 providing the first-user terminal 20A with SNS information, will be described with reference to the routine illustrated in FIG. 19. The providing processing illustrated in FIG. 19 is repeatedly executed by the center server 30 every predetermined amount of time with regard to each first-user terminal 20A. Note that description will be made below with the understanding that the user information database 311 and the traveling information database 313 store necessary information.

In step S501, the providing unit 304 acquires the first-user information (first-user ID and the SNS account of the first user). The relation between each first-user terminal 20A and the first user is stored in the user information database 311. The providing unit 304 reads the first user information corresponding to the first-user terminal 20A. Next, in step S502, the providing unit 304 acquires the travelling information of the first-user terminal 20A. The travelling information that the traveling information acquisition unit 303 has acquired from the first-user terminal 20A is stored in the traveling information database 313. Accordingly, the providing unit 304 reads the travelling information corresponding to the first-user terminal 20A that is stored in the traveling information database 313. The providing unit 304 acquires the travelling information corresponding to the first-user terminal 20A based on the first-user terminal ID included in the first-user information.

In step S503, the SNS information acquisition unit 302 acquires the SNS information of the second user from the SNS server 40. The SNS information acquisition unit 302 accesses the SNS server 40 and picks up the second user that has a relation with the first user (the second user that the first user is following). Further, the SNS information acquisition unit 302 acquires SNS information including information relating to locations about which the second user has posted from the SNS server 40. Note that the SNS information that is acquired from the SNS server 40 may be restricted to, for example, SNS information of which the location about which the second user has posted is included in a predetermined region from the current location of the first-user terminal 20A. Also, the SNS information that is acquired from the SNS server 40 may be restricted to, for example, that corresponding to posts on which the first user has pressed a social button. The SNS information acquisition unit 302 stores the acquired SNS information in the SNS information database 312.

In step S504, the providing unit 304 generates notification information based on the SNS information acquired by the SNS information acquisition unit 302. The SNS information that the SNS information acquisition unit 302 acquires from the SNS server 40 is stored in the SNS information database 312. Accordingly, the providing unit 304 reads the SNS information stored in the SNS information database 312. The providing unit 304 generates notification information corresponding to posted locations included in the SNS information. The notification information includes at least information relating to the SNS account of the second user and information relating to posted locations. Note that the generated notification information may be restricted to notification information corresponding to posts on which the first user has pressed a social button, for example. That is to say, in step S503, SNS information may be acquired regardless of whether the first user has pressed a social button on the posts, and in step S504, posts on which the first user has pressed a social button are selected and notification information may be generated. Then in step S505, the providing unit 304 transmits the notification information to the first-user terminal 20A.

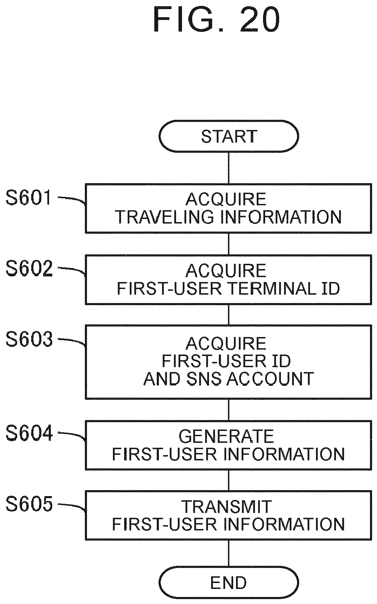

Next, processing that the first-user management unit 206 executes in the first-user terminal 20A will be described. FIG. 20 is a flowchart of processing that the first-user management unit 206 according to the present embodiment executes. The processing illustrated in FIG. 20 is repeatedly executed every predetermined amount of time by the first-user management unit 206.

In step S601, the first-user management unit 206 acquires travelling information of the first-user terminal 20A. The first-user management unit 206 acquires traveling information based on position information detected by the position information sensor 27. In step S602, the first-user management unit 206 acquires the first-user terminal ID. The first-user management unit 206 acquires the first-user terminal ID stored in the auxiliary storage unit 23. Further, in step S603, the first-user management unit 206 acquires the first-user ID and the SNS account of the first user. The first-user management unit 206 acquires the first-user ID and the SNS account of the first user stored in the auxiliary storage unit 23.

Next, in step S604, the first-user management unit 206 generates the first-user information. The first-user management unit 206 generates the first-user information based on the first-user ID, the SNS account of the first user, the first-user terminal ID, and the traveling information. In step S605, the first-user management unit 206 transmits the generated first-user information to the center server 30. Note that the processing of the map display unit 205 is the same as the processing illustrated in FIG. 11, and accordingly description will be omitted.

According to the present embodiment described above, locations which are popular on the SNS are displayed at the first-user terminal 20A. Accordingly, a situation where the first user is near such locations but passes by without noticing can be suppressed.

### Other Embodiments

The above embodiments are only examples, and the invention may be carried out with various modifications without departing from the essence thereof.

The processing and means described in the present disclosure may be freely combined and carried out insofar as there is no technical contradiction.

Also, processing described as being performed by a single device may be shared and executed among a plurality of devices. Alternatively, processing described as being performed by different devices may be executed by a single device. What sort of hardware configuration (server configuration) is made to realize each of the functions in a computer system is flexibly changeable. For example, part or all of the functions of the SNS server 40 may be provided to the center server 30.

Although an example of the center server 30 functioning as an information processing device has been described in the above embodiments, this is not restrictive, and the onboard device 100 may serve as an information processing device, or the first-user terminal 20A may serve as an information processing device. Also, the center server 30, and the onboard device 100 or first-user terminal 20A may serve as an information processing device. For example, although the center server 30 is provided with, as functional components, the user information acquisition unit 301, the SNS information acquisition unit 302, the traveling information acquisition unit 303, the providing unit 304, the user information database 311, the SNS information database 312, the traveling information database 313, and the map information database 314 in the above embodiments, part or all of these functional components may be provided to the onboard device 100. Also, the first-user terminal 20A may be a terminal installed in the vehicle 10.

Also, although a location about which the second user that the first user is following has posted, which is a posted location on which the first user has pressed a social button, is displayed on a map in the above embodiments, it is not indispensable for this to be a location about which the first user has pressed a social button. For example, a location may be displayed on the map as long as a location about which the second user that the first user is following has posted, even if the first user has not pressed a social button. Also, a location about which the second user that the first user is following has posted may be displayed on the map if a posted location about which at least a predetermined number of other users besides the first user have pressed a social button. In this arrangement, the SNS information acquisition unit 302 acquires SNS information regarding the location about which the second user that the first user is following has posted, which is a posted location about which at least a predetermined number of other users besides the first user have pressed a social button, from the SNS server 40 in step S103 in the flowchart illustrated in FIG. 9. This SNS information is then stored in the SNS information database 312.

Also, although locations that the second user that the first user is following has posted are displayed on the map in the above embodiments, other locations may be displayed on the map as well. For example, locations of shops that the first user is following may be displayed on the map. In this arrangement, the SNS information acquisition unit 302 acquires SNS information regarding the location of shops that the first user is following, from the SNS server 40 in step S103 in the flowchart illustrated in FIG. 9. Also, the SNS accounts of shops is stored in the second-user SNS account field in the SNS information database 312 instead of the SNS account of the second user, and locations of the shops are stored in the posted location field instead of the posted location by the second user. Then, in step S104, notification information is generated based on information relating to the locations of shops.

Also, for example, when a user that the first user is not following has posted regarding a location, and the number of times of other users pressing a social button on the post is at least a predetermined number, this location may be displayed on the map. The predetermined number may be specified by the first user, or may be set in advance at the system side. In this arrangement, the SNS account of the first user is not necessarily needed. That is to say, the onboard device 100 or first-user terminal 20A does not have to send information relating to the SNS account of the first user to the center server 30. For example, when the onboard device 100 transmits position information to the center server 30, the center server 30 acquires from the SNS server 40 information relating to a posted location within a predetermined region from the vehicle 10, where the number of times of a social button being pressed is at least the predetermined number. The information relating to this location is then transmitted from the center server 30 to the onboard device 100. In this arrangement, acquisition of the SNS account of the first user in step S101 in the routine illustrated in FIG. 9 can be omitted. Also, in step S103, the SNS information acquisition unit 302 acquires from the SNS server 40 information relating to the location on which the number of times of a social button being pressed is at least the predetermined number (position information, information relating to content of the post, information relating to an image, information relating to the number of times of a social button being pressed, and so forth). Then, in step S104, notification information is generated based on the information acquired in step S103.

Also, a location about which at least a predetermined number of users have posted may be displayed on the map, for example, regardless of whether the users are users that the first user is following. The predetermined number may be specified by the first user, or may be set in advance at the system side. In this arrangement, the SNS account of the first user is not necessarily needed. That is to say, the onboard device 100 or first-user terminal 20A does not have to send information relating to the SNS account of the first user to the center server 30. For example, when the onboard device 100 transmits position information to the center server 30, the center server 30 acquires from the SNS server 40 information relating to a posted location within a predetermined region from the vehicle 10, about which there has been at least the predetermined number of posts. The information relating to this location is then transmitted from the center server 30 to the onboard device 100. In this arrangement, acquisition of the SNS account of the first user in step S101 in the routine illustrated in FIG. 9 can be omitted. Also, in step S103, the SNS information acquisition unit 302 acquires from the SNS server 40 information relating to the location about which there has been at least the predetermined number of posts (position information, information relating to content of the post, information relating to an image, information relating to the number of times of a social button being pressed, and so forth). Then, in step S104, notification information is generated based on the information acquired in step S103.

Also, although the onboard device 100 acquires the SNS account of the first user from the first-user terminal 20A in the above embodiments, the vehicle ID and the SNS account of the first user may be associated in advance. In this arrangement, the onboard device 100 and the first-user terminal 20A do not need to communicate. For example, the SNS account of the first user may be transmitted from the onboard device 100 to the center server 30 when the vehicle 10 is started. Alternatively, the relation between the vehicle ID and the SNS account of the first user may be stored in the center server 30 in advance, and the onboard device 100 may transmit information relating to startup of the vehicle 10 to the center server 30 when the vehicle 10 is started. The center server 30 may then acquire the SNS account of the first user based on the vehicle ID.

Also, information regarding the posted location is displayed in the above embodiments when the first user taps on an icon or the like of the second user indicating the location about which the second user has posted, but this displaying is not indispensable. It is sufficient to simply display information on the map whereby the posted location can be understood.

The invention can also be realized by a computer program implementing the functions described in the above embodiments being provided to a computer, and one or more processors that the computer has reading and executing the program. Such a computer program may be provided to the computer by a non-transitory computer-readable storage medium connectable to a system bus of the computer, or may be provided to the computer via a network. Examples of the non-transitory computer-readable storage medium include optional types of disks such as magnetic disks (floppy (registered trademark) disks, hard disk drives (HDD), and so forth), optical disks (CD-ROM and DVD discs, Blu-ray discs, and so forth), and optional types of media suitable for storing electronic commands such as read-only memory (ROM), random access memory (RAM), EPROM, EEPROM, magnetic cards, flash memory, and optical cards.

## Claims

1. An information processing device comprising a processor (31) configured to:
acquire information relating to a posted location that is a location about which one or more second users different from a first user have performed a first posting to a social networking system; and
transmit an instruction to an onboard device (100) or a terminal (20A) of the first user, to display the posted location on a map displayed on a screen of the onboard device (100) or a screen of the terminal (20A) of the first user.

2. The information processing device according to claim 1, wherein the processor (31) is configured to, when acquiring information relating to the posted location, acquire information relating to a location about which the one or more second users have performed the first posting to the social networking system, the one or more second users having a relation with the first user on the social networking system.

3. The information processing device according to claim 1 or 2, wherein the processor (31) is configured to, when acquiring the information relating to the posted location, acquire information relating to a posted location for which a record of a positive reaction by the first user exists.

4. The information processing device according to any one of claims 1 to 3, wherein the processor (31) is configured to, when acquiring information relating to the posted location, acquire information relating to a location about which at least a predetermined number of the one or more second users have performed posting.

5. The information processing device according to any one of claims 1 to 4, wherein the processor (31) is configured to, when acquiring information relating to the posted location, acquire information relating to a posted location for which a record of a positive reaction by at least a predetermined number of the one or more second users exists.

6. The information processing device according to any one of claims 1 to 5, wherein the processor (31) is configured to transmit an instruction to the onboard device (100) or the terminal (20A) of the first user to display an image relating to the one or more second users having posted to the social networking system, at a position on the map displayed on the screen of the onboard device (100) or the screen of the terminal (20A) of the first user that corresponds to the posted location.

7. The information processing device according to claim 6, wherein the processor (31) is configured to, when the first user taps on the image, transmit an instruction to the onboard device (100) or the terminal (20A) of the first user to display, on the screen, content that the one or more second users have posted.

8. The information processing device according to any one of claims 1 to 7, wherein the processor (31) is configured to, when transmitting the instruction to the onboard device (100) or the terminal (20A) of the first user, to display the posted location on the map displayed on the screen of the onboard device (100) or the screen of the terminal (20A) of the first user, transmit an instruction to the onboard device (100) or the terminal (20A) of the first user to display a posted location included in a predetermined region from a current location of the onboard device (100) or the terminal (20A) of the first user.

9. A non-transitory storage medium storing instructions that are executable by one or more processors (31) and that cause the one or more processors to perform functions comprising:
acquiring of information relating to a posted location that is a location about which one or more second users different from a first user have performed a first posting to a social networking system; and
transmitting an instruction to an onboard device (100) or a terminal (20A) of the first user, to display the posted location on a map displayed on a screen of the onboard device (100) or a screen of the terminal (20A) of the first user.

10. The non-transitory storage medium according to claim 9, wherein information relating to the posted location includes information relating to a location about which the one or more second users have performed the first posting to the social networking system, the one or more second users having a relation with the first user on the social networking system.

11. The non-transitory storage medium according to claim 9 or 10, wherein information relating to the posted location includes information relating to a posted location for which a record of a positive reaction by the first user exists.

12. The non-transitory storage medium according to any one of claims 9 to 11, wherein information relating to the posted location includes information relating to a location about which at least a predetermined number of the one or more second users have performed posting.

13. The non-transitory storage medium according to any one of claims 9 to 12, wherein information relating to the posted location includes information relating to a posted location for which a record of a positive reaction by at least a predetermined number of the one or more second users exists.

14. The non-transitory storage medium according to any one of claims 9 to 13, wherein the functions further comprises transmitting an instruction to the onboard device (100) or the terminal (20A) of the first user to display an image relating to the one or more second users having posted to the social networking system, at a position on the map displayed on the screen of the onboard device (100) or the screen of the terminal (20A) of the first user that corresponds to the posted location.

15. The non-transitory storage medium according to claim 14, wherein the functions further comprises transmitting an instruction to the onboard device (100) or the terminal (20A) of the first user to display, on the screen, content that the one or more second users have posted, when the first user taps on the image.

16. A system comprising:
an onboard device (100) or a terminal (20A) of a first user, the onboard device (100) or the terminal (20A) of a first user having a screen configured to display a map; and
a server (30) having a processor (31) configured to
acquire of information relating to a posted location that is a location about which one or more second users different from the first user has performed a first posting to a social networking system, and
transmit an instruction to the onboard device (100) or the terminal (20A) of the first user, to display the posted location on a map displayed on a screen of the onboard device (100) or a screen of the terminal (20A) of the first user.

17. The system according to claim 16, wherein the processor (31) is configured to, when acquiring information relating to the posted location, acquire information relating to a location about which the one or more second users have performed the first posting to the social networking system, the second user having a relation with the first user on the social networking system.

18. The system according to claim 16 or 17, wherein the processor (31) is configured to, when acquiring information relating to the posted location, acquire information relating to a posted location for which a record of a positive reaction by the first user exists.

19. The system according to any one of claims 16 to 18, wherein the processor (31) is configured to, when acquiring information relating to the posted location, acquire information relating to a location about which at least a predetermined number of the one or more second users have performed posting.

20. The system according to any one of claims 16 to 19, wherein the processor (31) is configured to transmit an instruction to the onboard device (100) or the terminal (20A) of the first user to display an image relating to the one or more second users having posted to the social networking system, at a position on the map displayed on the screen of the onboard device (100) or the screen of the terminal (20A) of the first user that corresponds to the posted location.
